Europäisches Patentamt

European Patent Office

Office européen des brevets

(19)

(11) Publication number: **0 158 409**
**A2**

(12) **EUROPEAN PATENT APPLICATION**

(21) Application number: **85300372.1**

(22) Date of filing: **21.01.85**

(51) Int. Cl.⁴: **H 04 N 1/40**

(30) Priority: **05.04.84 GB 8408860**

(43) Date of publication of application:
**16.10.85 Bulletin 85/42**

(84) Designated Contracting States:
**AT BE CH DE FR IT LI LU NL SE**

(71) Applicant: **The British Library Board**
**Sheraton Street**
**London, W1V 4BH(GB)**

(72) Inventor: **Brotton, James**
**1 Moss Drive**
**Haslingfield Cambridgeshire(GB)**

(74) Representative: **Nash, Keith Wilfrid et al,**
**KEITH W. NASH & Co. Pearl Assurance House 90-92**
**Regent Street**
**Cambridge CB2 1DP(GB)**

(54) Improved threshold detector.

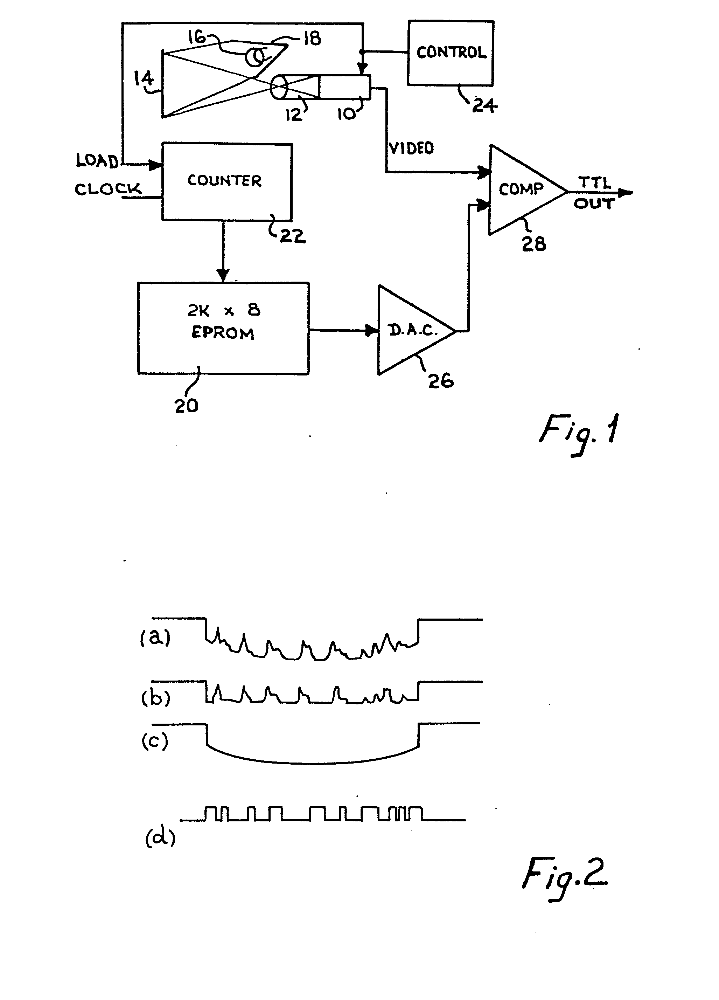

(57) A threshold detector, more especially when embodied in a document scanning device, wherein a varying amplitude video signal is compared with a threshold signal. In accordance with the invention, the threshold signal is produced by a circuit which comprises a counter (22) synchronized to the scanning to produce a sequence of digital values of each line of scan, a memory device (20) which stores digital values released by the digital values produced during scanning, and a D/A converter (26) which produces the required threshold voltage from the digital values released from the memory (Fig 1).

EP 0 158 409 A2

## Improved Threshold Detector

### Field of invention

This invention concerns threshold detectors of the type used to convert a varying amplitude electrical signal (such as a video signal obtained by scanning a photosensitive region having a light image focussed thereon) into an electrical signal made up of constant amplitude pulses the durations of which correspond to the durations of the corresponding amplitude excursions of the original video signal.

The invention also lies in a scanner when fitted with an improved detector.

### Background to the invention

The process of detection just described is most simply achieved by comparing the varying amplitude electrical signal with a reference signal (commonly referred to as a threshold) and generating a constant amplitude pulse only when the amplitude of the varying amplitude signal bears a particular relationship to the volume of the threshold signal.  Typically this relationship is when the amplitude of the one signal equals the value of the threshold signal but any relationships may be used as convenient.

Where the value of the threshold signal is constant, errors can occur when the amplitude of the varying amplitude signal varies due to factors such as uneven illumination, as well as due to different picture content in the scanned image.

Uneven illumination is the single most significant factor since this will tend to produce a white level amplitude of the video signal which varies along the length of each line scan. Typically the amplitude corresponds to a higher brightness level in the control region of each line with amplitudes corresponding to less bright levels at the end regions of each line.

It is an object of the present invention to provide an improved detector by which this problem is overcome.

## Prior art

It is known to measure the mean amplitude level of an amplitude varying video signal to obtain a threshold voltage which varies in sympathy with the mean brightness level of the video signal, and compare the instantaneous video signal amplitude therewith.

It is also known to store signals derived from the scanning device whilst the latter is subjected to so-called uniform illumination and generate a compensating signal therefrom which when combined with a constant threshold voltage will produce a varying amplitude threshold signal.

## Summary of the invention

According to the present invention there is provided a threshold detector comprising

(1)    a comparator for comparing a varying amplitude video signal (produced by scanning) with a reference voltage

(2)    an input for the video signal, and

(3)    a reference voltage generating circuit comprising

(a)    a counter synchronized to the scanning producing the video signal such that the counter produces a particular sequence of digital values during each line of scan

(b)    a memory device containing a number of memory locations at least equal to the number of different values produced by the counter during each line of scan, each digital value causing a different one of the memory locations to be addressed, to output a digital value stored thereat; and

(c)    digital to analogue conversion circuit means for converting the digital outputs from the memory into an analogue signal which constitutes the threshold signal for the comparator.

Preferably the memory device is a programmable memory and typically a so-called erasable programmable memory (EPROM) device is employed.

The memory device may include a programming aid associated therewith so that its contents can be adjusted to accommodate lamp ageing, variations introduced by the substitution of one lamp for another and the like.

The invention also comprises a scanning device for producing a binary signal corresponding to the information

- 4 -

content of a document or the like presented thereto which includes:

(1)    lamp means for illuminating the document

(2)    imaging means for forming an image of the illuminated document on the photosensitive surface of a camera which is scanned electrically to produce a varying amplitude electrical video signal, and

(3)    a threshold detector circuit as aforesaid which receives the video signal and produces therefrom a series of constant amplitude pulses as a so-called detected video signal.

The invention will now be described by way of example with reference to the accompanying drawings in which

Fig 1 shows schematically a circuit of a scanner and improved threshold detector embodying the invention, and

Fig 2 shows graphically a video signal and programmed threshold signal according to the invention.  In the figure a camera 10 is caused to scan an image formed thereon by a lens 12.  The scanning may be entirely electronic as in a standard television camera, or may be linear, with frame scanning being achieved by relative movement of the camera or lens or object which is imaged.

In the embodiment shown a plane object such as a document page 14 is illuminated by a lamp 16 and reflector 18.

Fall-off in light level at the extremes of the scanning can produce variation in the mean value of the video signal as shown in Fig 2(a).

Fig 2(b) shows an ideal video signal in which the mean
light level is constant.

In order to compensate for the varying light level
component of the video signal in Fig 2(a), a threshold
voltage (see Fig 2(c)) with which it is to be compared
must vary in sympathy with the mean signal variation.

To this end the threshold voltage is generated during each
line of scan from digital values stored at different
locations in a memory 20. Each location is addressed in
turn by a counter 22 which is reset by the load signal
derived from the scanning camera control circuit 24. This
produces the signals needed to control the camera 10 which
in the embodiment shown is assumed to be a linear camera
having a line of photoresistance (typically charge coupled
devices) arranged in the direction of line scanning (each
device in the line being addressed in turn following the
appearance of a 'load' signal) and the camera is moved
systematically in a perpendicular direction to present
successively different lines of the image to the line of
devices, the perpendicular movement being synchronized
with the load signals so that the scanning corresponds to
a series of consecutive lines.

A clock pulse generator (not shown) causes the counter 22
to step during each line scan and the digital output
signals appearing at the output of the memory 20 are
converted into an analogue signal by a digital to analogue
converter 26.

The output from the latter appears as shown at Fig 2(c) and is applied to one input of a comparator 28, the video signal (corresponding to Fig 2(a) being applied to the other output.

A typical resulting output signal is shown at Fig 2(d).

In a modification of the invention, a signal, obtained from the scanning may be digitized and stored in the memory and these values used to produce the varying threshold signal of Fig 2(c). Where these values are obtained from scanning a white document, the values will correspond to any uneveness in the illumination in the line of scan direction.

## CLAIMS

1.     A threshold detector comprising a comparator (28) for comparing a varying amplitude video signal produced by scanning with a reference voltage and a reference voltage generating circuit characterised by the combination of:-

    (a)  a counter (22) synchronized to the scanning producing the video signal such that the counter produces a particular sequence of digital values during each line of scan

    (b)  a memory device (20) containing a number of memory locations at least equal to the number of different values produced by the counter during each line of scan, each digital value causing a different one of the memory locations to be addressed to output a digital value stored thereat, and

    (c)  a digital to analogue conversion circuit (26) for converting the digital outputs from the memory into an analogue signal which constitutes a threshold signal for the comparator.

2.     A threshold detector according to claim 1, characterised in that the memory device (20) is a programmable memory.

3.     A threshold detector according to claim 2, characterised in that the memory device (20) is an erasable programmable memory (EPROM).

4.     A threshold detector according to claim 2 or claim 3, including a programming aid associated with the memory device to enable adjustment of the memory contents.

5. A scanning device for producing a binary signal corresponding to the information content of a document or the like presented thereto which includes lamp means (16) for illuminating the document (14), and imaging means (12) for forming the image of the illuminated document on the photosensitive surface of a camera (10) which is scanned electrically to produce a varying amplitude electrical video signal, characterised by a threshold detector as claimed in any of claims 1 to 4 which receives the video signal and produces therefrom a series of constant amplitude pulses for conversion to a detected video signal.

6. A scanning device according to claim 5, characterised in that the camera is controlled by a load signal produced by a camera control circuit (24), and the load signal is also employed for resetting of the counter (22).

7. A scanning device according to claim 6, characterised in that the camera is line scanned responsive to a load signal which resets the counter at the beginning of each line.

8. A scanning device according to claim 7, characterised in that, during each line scan, the counter is stepped by a clock pulse generator.

9. A scanning device according to claim 5, characterised in that a signal derived from scanning a white document is digitized and stored in the memory device (20).

Fig.1

Fig.2